# EUROPEAN PATENT SPECIFICATION

(11) **EP 1 970 134 B1**
(45) Date of publication and mention of the grant of the patent: **23.07.2014**
(21) Application number: 08004747.5
(22) Date of filing: 14.03.2008
(51) Int. Cl.: B08B 9/42, B29C 49/42, B65G 47/84

(54) **Gripper for rinsing or blowing machines**
Greifer für Spül- oder Blasmaschinen
Préhenseur pour des machines à rincer ou à souffler

(30) Priority: 14.03.2007 IT cr20070003
(43) Date of publication of application: 17.09.2008
(73) Proprietor: PROMEC S.R.L., 43010 Fontevivo (Parma) (IT)
(72) Inventor: Rocchi, Flavio, 43012 Fontanellato (IT); Vettori, Matteo, 43100 Parma (IT); Pirondi, Alessandro, 43100 Parma (IT)
(74) Representative: Karaghiosoff, Giorgio Alessandro

(56) References cited:
- EP-A1- 1 375 395
- DE-A1-102005 041 929
- DE-U1- 9 411 971
- DE-U1-202005 002 924
- FR-A1- 2 765 816

## Description

The present invention relates to the sector of rinsing, sterilizing or blowing machines for bottles or containers. The invention relates in particular to the machines for bottles in glass, plastic or other materials, cans etc...

A machine of the above described kind basically comprises a turntable or carousel provided, at the periphery, with a plurality of gripping devices or grippers and nozzles for the so-called conditioning fluid, which can be a liquid for washing or a gas fluid for blowing. The carousel interacts with two devices for the entry and exit of the containers, usually comprising star wheel conveyors.

For the purpose of simplicity, from now on reference will be made to a rinsing machine for bottles that interacts with a feeding star and an output star, in which the bottles are in upright position.

The rinsing machine basically works as follows: it grasps a bottle from the feeding star, in upright position; it turns the bottle upside down so as to place its neck in front of the conditioning (washing or blowing) and eventual dripping nozzles; finally, it reverses the bottle once again to hand it over the output star.

Said operations are concisely referred to as: overturning, treatment and dripping; final rotation. All these operations are performed at high speed, along a rotation arch of the carousel called "angle of action". The complement of said angle of action is inevitably a "dead" angle, which is usually wider in smaller machines, and is basically due to the overturning and final rotation phases and the space required by the feeding and output star.

It is clear that the gripping means, or grippers, need to have at least two degrees of freedom: a first degree of freedom enabling the overturning and final rotation movement of the containers; a second degree of freedom enabling the grasping and releasing movement.

A known machine is disclosed by DE102005041929A1, which describes a gripper comprising first and second pivotally mounted gripper arms, formed by magnetically cooperating permanent magnets applied in the gripping direction of pivoting, in which are also arranged permanent magnets that are mutually repelling and attracting at the same time.

The sum of the applied repulsive and attractive forces in the pivoting gripping direction on the gripper arms within a predetermined gripping range of the gripper which covers different container gripping sizes.

In order to better understand the structure of said gripping means, reference will be made to a first known kind of gripper for bottle rinsers, shown in accompanying Fig. 1 (side view) and Fig. 2 (section view), and to a second known kind of gripper shown in Fig. 3 (side view with partial section of a bottle in three relevant positions) and in Fig. 4 and Fig. 5 (section view respectively with and without bottle).

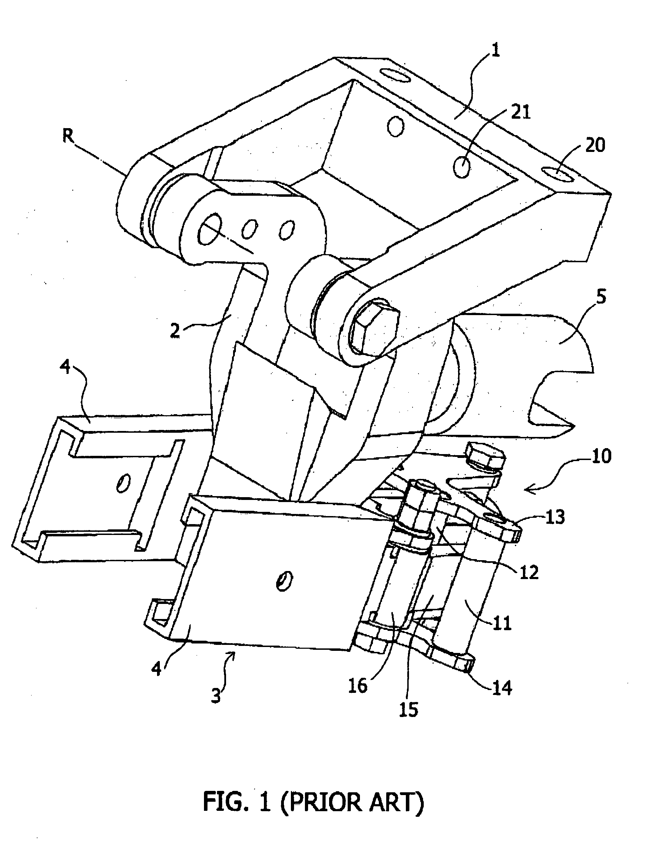

Fig. 1 shows a first gripper, essentially comprising a supporting fork 1 and a gripper body 2, pivoted on the supporting fork 1 so that it can rotate with respect to axis R.

Fork 1 is the only element of the gripper to be integral with the carousel of the machine, by means of screws placed in the holes 20; it also supports the nozzle of the washing fluid (not shown), which is fastened in the holes 21 thanks to some screws.

The gripper body 2 carries a complete gripping unit 3, which basically works together with two gripping means comprising movable levers 4, acting by means of grippers for grasping the neck of a bottle by means of rubber pads (not shown).

The rotation with respect to said axis R represents the first degree.

of freedom of the gripping means, in other words to the overturning and final rotation movement. Said rotation is generated by a fork 5 associated with a curvilinear guide (not shown) called twist. Usually the twist is a steel drawn having a circular section, which develops along the action arch of the carousel.

Basically, during the rotation of the carousel, the fork 5 follows the curvilinear course in the space of the twist, so that it causes the desired overturning and final rotation movement of the gripper body 2.

The second degree of freedom, for the opening and closing of the movable levers 4, is driven by a rotation coupling, essentially by means of a cursor unit 10 sliding in the lower portion (basically cylindrical and hollow) of the gripper body 2.

The cursor body 10 drives the movable levers 4 by means of squares or foils 13 and 14, supporting a double couple of bushes or driving pivots 11 and 12, typically in plastic material. Each couple of driving pivots 11, 12 acts on a drive cam 15 that is integral with a relative movable lever 4, and which causes its rotation around a respective pivot 16. Said kinematic drive motion of the grippers, characterized also by the total irreversibility of the movement, is described more in detail in FR-A-2765816, of the same inventor, to which reference is made.

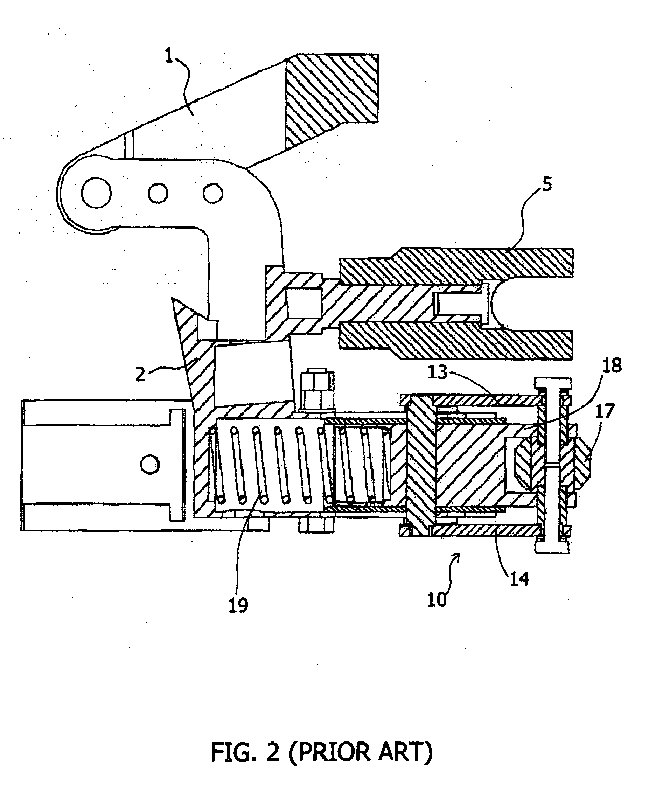

The cursor unit 10 (Fig.2) is activated by a drive cam 30 (fastened to the frame of the machine, like the twist) by means of a small roller 17 pivoted between the foils 13 and 14, and made of plastic material.

The cursor unit 10 also comprises a piston pin or piston 18, axially sliding in the hollow seat of the gripper body 2 and is contrasted by a return spring 19 housed in the same gripper body.

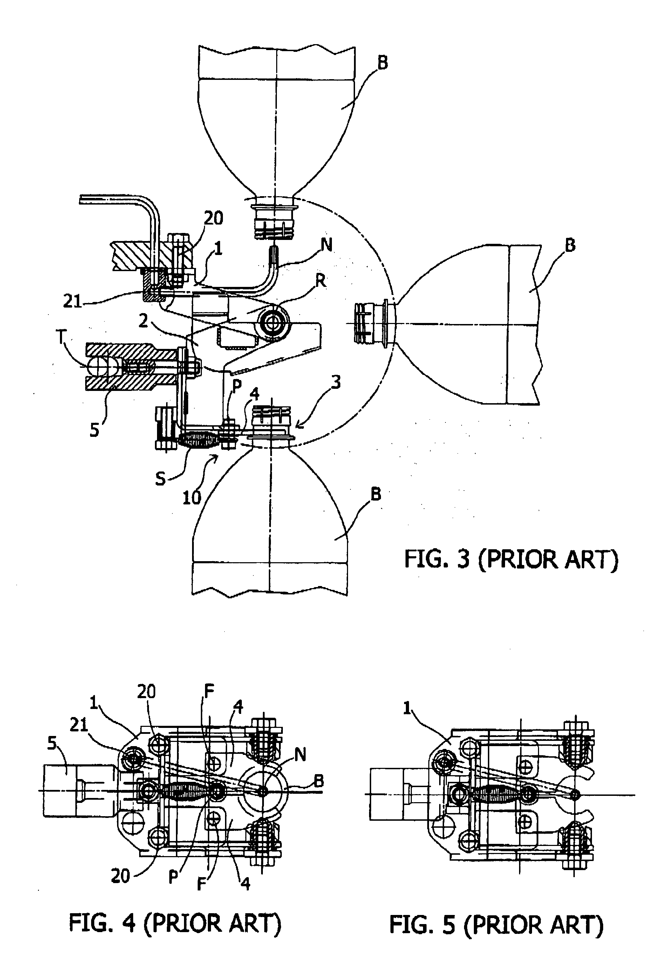

Fig. 3 shows a second kind of gripper, basically comprising a supporting fork 1 and a gripping body 2, pivoted on fork 1 so that it can rotate with respect to the axis R.

The fork 1 is the only element of the gripper to be integral with the carousel of the machine, by means of screws inserted in the holes 20; it also supports the nozzle N of the washing fluid, which is fastened by means of screws in the holes 21.

The gripper body 2 carries a complete gripping unit 3, which basically works by means of two gripping means comprising movable levers 4, acting as grippers for grasping the neck of a bottle B.

The rotation with respect to said axis R corresponds to the first degree of freedom of the gripping means, in other words to the overturning and final rotation movement. Said rotation is generated by a fork 5 associated with a curvilinear guide T called twist. Usually the twist is a steel drawn having circular section, which develops along the action arch of the carousel.

The second degree of freedom, for the opening and closing of the movable levers 4, is driven by a rotation coupling, essentially by means of a cursor body 10 sliding in the lower portion (basically cylindrical and hollow) of the gripping body 2.

The cursor unit 10 drives the movable levers 4, being F their fulcrum, by means of a pivot P movable in a seat placed on the longitudinal axis of the gripping body 3 (Figs 4, 5). Advantageously, said seat is obtained by the coupling of the two movable levers 4, and the pivot P keeps the movable levers in closed position by means of the effect of the returning action of the return spring S placed between the gripping body 2 and said pivot P.

The element to focus on, considering the present invention, is the presence of said return spring 19, S.

In the first example of prior art, when the roller 17, as an effect of the rotation of the carousel, leaves cam 30, said spring 19 makes the gripper return in a predefined idle position, for example that of a closed gripper (Fig. 2).

In the second example of prior art, when the bottle is extracted from the gripping unit and is handed out to the output star, said spring S makes the gripper return in a predefined idle position, for example that of a closed gripper (Fig. 5).

Further embodiments of grippers are known for rinsing machines or more in general for the conditioning of bottles or other containers, having different drive systems for the opening/closing of the gripping means, but all of them comprising at least a mechanical spring or an equivalent elastic mechanical opposition device, suitable for keeping the gripping means usually closed or usually open, as the case may be, quite similarly to the above described spring 19.

The presence of said spring implies some problems and disadvantages. Firstly, the spring is subject to a continuous stress because of the compression and release. It must be remarked that the currently used rinsing machines work at a very high speed and the spring can easily accumulate a large number of fatigue cycles, with the risk of sudden breaking.

Furthermore, it has been noted that impurities and dirt accumulate in the seat of the spring, causing bad hygienic global conditions of the gripper.

The aim of the invention is to overcome these problems, and in particular to eliminate the mechanical spring of the gripper, to improve the general hygiene of the equipment, to avoid the risk of sudden fatigue failure and to reduce the maintenance and spare parts costs.

The aims are achieved by a system for actuating a gripper for rinsing or blowing machines for containers, namely for bottles, comprising at least:
a fixing support;
a gripping body connected to said support;
movable gripping and release devices for said containers;
a unit movable with respect to the gripping body and arranged as to activate said movable gripping devices;
an opposition device associated to said movable unit, adapted to exert a return action on the movable unit and on the gripping means to set them again a predetermined idle position; said opposition device comprises at least a first magnet, adapted to interact magnetically with a suitable opposition element to exert said return action in which only one of the magnet or the opposition element is movable and the other is stationary, in which said first magnet is associated with the movable unit and is movable and said opposition element is a stationary second magnet which is integral with the gripping body.
The invention is also related to a system for actuating a gripper for rinsing or blowing machines for containers, namely for bottles, which machine comprises a turntable or carusel provided at the periphery with a plurality of grippers and nozzles
the said grippers comprising at least:
   - a support to be fixed on a rinsing or blowing machine;
   - a gripping body connected to said support;
   - movable gripping and release devices for said containers;
   - a unit movable with respect to the gripping body and arranged so as to activate said movable gripping devices,
   - an opposition device associated with said movable unit, adapted to exert a return action of the movable unit and of the gripping means to set them again in a predetermined idle position,
wherein said opposition device comprises a first magnet adapted to interact magnetically with an opposition element to exert said return action, in which the said first magnet is movable and the said opposition element is a second magnet which is stationary and is secured to a fixed part of the machine relatively to the circular course of the carusel.

According to equivalent embodiments of the invention, said magnet and said opposition element are arranged as to react to the movement of said movable unit by reciprocal attraction or repulsion.

The opposition element can be equally a magnet or an element sensitive to the magnetic pull, for example made of ferrous material; obviously, in this last case, the opposition device works only by attraction and not by repulsion.

According to further equivalent embodiments of the invention, the movable unit comprises a cursor unit that is sliding with respect to the gripping body and, to activate said gripping devices, makes a thrust movement, i.e. towards the gripping, or a traction movement, i.e. toward the frame of the machine, according to the kinematical movement provided on the gripper to set on the above said devices.

According to a more preferred embodiment of the invention, the opposition device comprises a movable magnet, associated with the cursor unit, and a fixed magnet integral with the gripping body, representing the opposition element.

In a particularly preferred embodiment, the cursor unit comprises a piston on which a permanent magnet is placed, and said piston slides in said gripping body, in which is housed another permanent magnet, acting as an opposition element that drives back the magnet placed on the piston, opposing to the advance of the cursor unit.

In an even more preferred embodiment, the cursor unit comprises a magnetic pivot movable along one longitudinal axis of the gripping body, in a seat created by the coupling of the gripping means, in attraction or repulsion relation with respect to another magnetic element fastened on the gripping body or on the frame of the machine.

It is to be noted that, concerning the present invention, the term "magnet" means equally a permanent magnet, a permanently magnetized element or an electromagnet; and that the magnetic relation can be generated between two magnetic elements or between a magnetic and a ferromagnetic element.

The described opposition element basically acts as a magnetic spring, which is not subject to fatigue and can be completely embedded in the gripping body, making it possible to have more hygienic conditions of the machine.

The magnetic spring realized as described ensures also an almost unlimited life: as a matter of fact, the magnets are never in contact and are not subject to wearing; furthermore, as it is known, the magnets do not lose their charge because of the forces that they exert with other magnets. With the passing of time, in the permanent magnets a slow attenuation of the field can be noted, due to entropy phenomena; on the contrary, the present embodiment ensures a longer endurance compared to that of a mechanical spring and prevents from sudden breaking failures.

The working life of the magnets is practically as long as that of the same machine; thus, some costs can be eliminated, such as labor and spare parts costs due to the substitution of the mechanical springs.

The characteristics and advantages of the invention will become more evident in the following detailed description with reference to a preferred embodiment, and with the help of the enclosed drawings wherein:

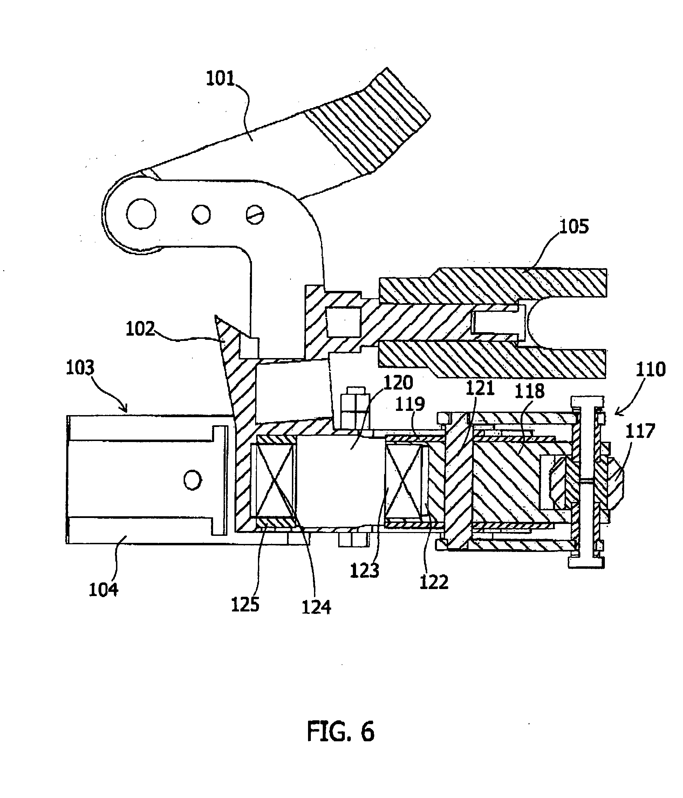

Fig. 6 is a longitudinal view of a gripper according to a first embodiment of the invention, in closed gripping position;

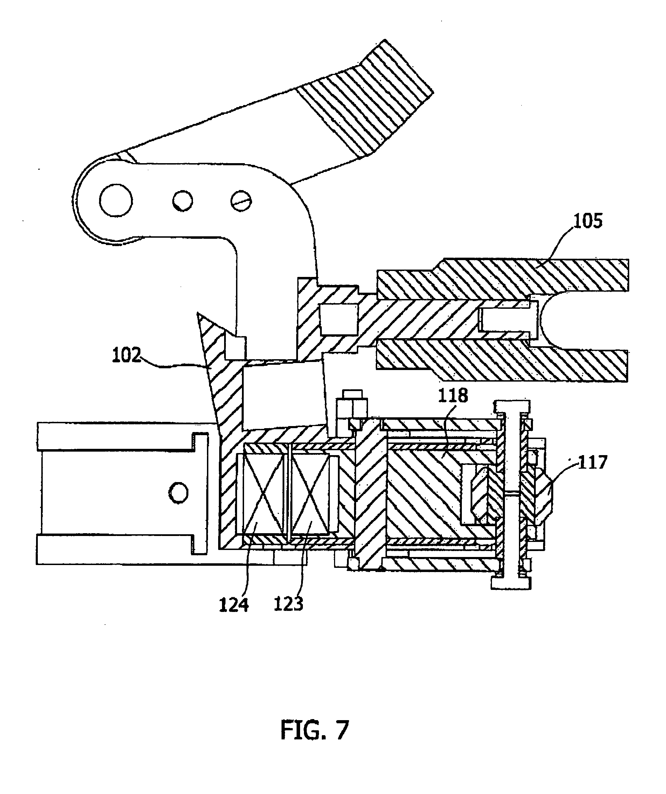

Fig. 7 is a section view of the gripper of Fig. 6, in open position for the release of the bottles;

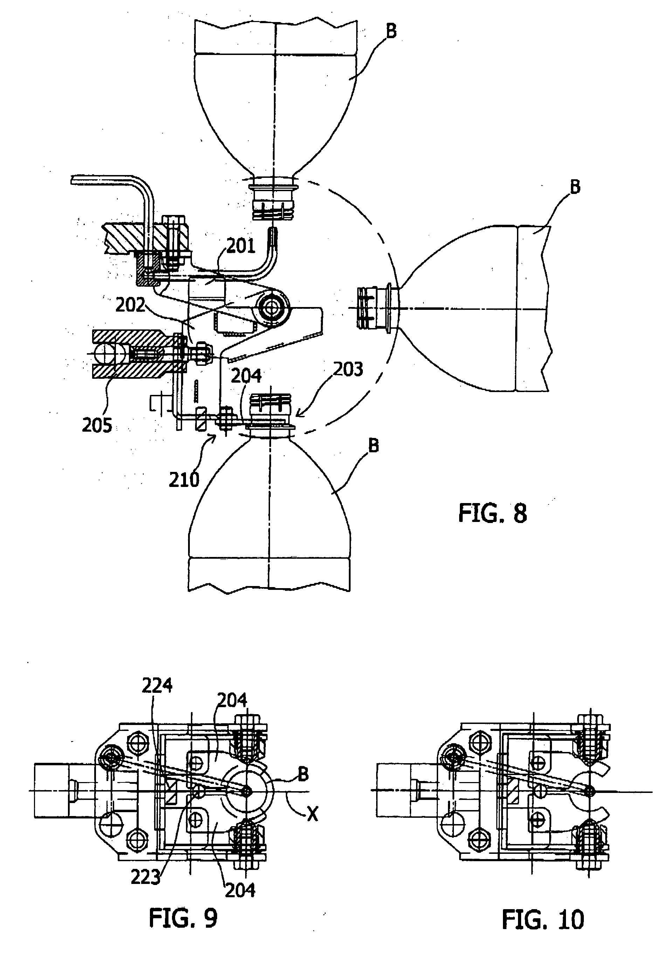

Fig. 8 is a side view partially sectioned of a second embodiment of the gripper;
Figs. 9 and 10 are a top view of the gripper of Fig. 8, respectively with and without the bottle.

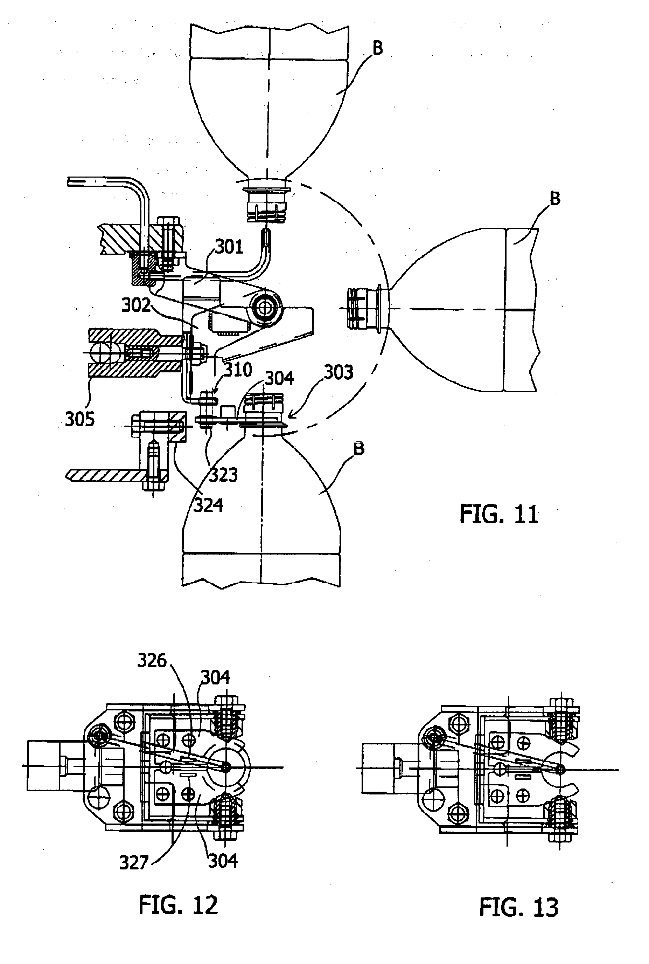

Fig 11 is a side view partially sectioned of a third embodiment of the gripper;
Figs 12 and 13 are a top view of the gripper of Fig. 11, respectively with and without the bottle.

Figs 6 and 7 show a gripper of the same kind as that of Figs 1 and 2, modified according to the invention. Said gripper basically comprises a supporting fork 101, a gripping body 102, a grasping unit 103 with movable grasping devices comprising the movable levers 104, a fork 105 for overturning and putting the bottles again in the initial verse (i.e. final rotation).

The supporting fork 101 is adapted to be connected to the periphery of the carousel of a rinsing or blowing machine for containers like bottles, tins etc...

The movable levers 104, working as grippers, are driven by a cursor unit 110, comprising a roller 117 interacting with a suitable driving cam 130 associated with the frame of the rinsing machine.

In the example, the roller 117 works by a "thrust" movement, i.e. it is at rest as per Fig. 6 and the driving cam 130 tends to push it towards the movable levers 104 (Fig. 7). However, the invention can also be realized in an almost equivalent way comprising a cursor unit suitable for working by traction.

The cursor unit 110 is sliding as a piston in the rear part of the gripping body 102. More in detail, said cursor unit 110 comprises a piston 118, inserted in a bush 119 and sliding in an hollow seat 120 of the gripping body. The cursor is driven by a pin 121; this one slides in slots of the gripping body that, apart from driving the cursor unit 110, define the two extreme positions of the same unit 110.

The piston 118 is provided with a hollow part 122, inside of which a permanent magnet 123 is housed. Another permanent magnet 124 is housed in the gripping body 102, inserted in a plastic bush 125 forced at the bottom of the hollow 120.

The magnets 123 and 124 are arranged to have their like poles one facing each other, i.e. to react by repulsion as they approach.

Basically, the magnet 123 moves with the piston 118 and consequently with the cursor unit 110, while the magnet 124 is a steady element with respect to the gripping body 102, which tends to repel the magnet 123 i.e. to keep the cursor unit 110 in the idle position of Fig. 6.

It is clear that the above said magnets 123 and 124 represent a sort of magnetic spring, in other words they have the same function as a mechanical spring, repelling the movement of the piston 118, with a force increasing as far as said piston 118 advances inside the gripping body. When in idle position, the preload force is generated by the initial distance imposed to the two magnets.

The idle position of the two magnets when at the maximum distance (Fig. 6) can equally correspond to the gripper either open or closed. The trim of the gripper normally closed is preferred because it is considered to be more reliable for gripping containers or bottles in a safe way.

On the other side, Fig. 7 shows the open gripper trim, in which the cursor unit 110 is at end-of-stroke position inside the hollow seat 120, pushed by cam 130. In this trim, it is to remark that the magnets 123 and 124 are very close, still without contact: the repulsion between the magnets, as the thrust imposed by cam 130 on roller 117 ceases, makes the cursor unit return to the position of Fig. 6 and closes again the gripper.

Wearing phenomena, typical of mechanical systems, are prevented since neither in the end-of-stroke position of Fig. 7 are the magnets in contact.

Figs 6 and 7 refer in a non-limitative way to a modified gripper, in which the general kinematic driving motion is basically of the kind already described when referring to Figs 1 and 2 of prior art, and already disclosed in the abovementioned. FR-A-2765816,

The invention, even as far as the kind of gripper and/or machine is concerned, is susceptible of variations.

For example, one or both the magnets 123 and 124 can be replaced with an electromagnet, particularly if it is desired to control the deactivation of the magnetic spring.

In further equivalent embodiments, one of the magnets can be substituted by a opposition element sensitive to the magnetic field. For example, one of the magnets 123 and 124 can be replaced with a paste in ferromagnetic material. In this case, it is clear that the magnetic force is always of the attractive kind; consequently, in a similar embodiment, the action of the driving cam on the cursor unit tends to spread the magnets apart (or the magnet and the opposition element such as the paste made of ferromagnetic material).

Moreover, the roller 117 (or similar) can work equally by thrust as per the example in Figs 6 and 7, or by traction, both if the magnets work by repulsion or by attraction, thanks to structure modifications to the kinematic motion of the gripper that are obvious for the skilled man.

For example, the mechanism shown in Figs 6 and 7 can be "inverted" so that the idle position would correspond to the maximum proximity of the magnets, and the driving cam 130 would work by traction on the cursor unit 110. In this case the magnets 123 and 124 can be arranged with their unlike poles facing each other, so that the return is ensured by the attraction (instead of the repulsion) between the same magnets. It is also clear that in such embodiment one of the magnets can be replaced, for example, with an element made of ferrous material subject to the attraction of the magnet remaining.

Figs 8, 9 and 10 show a gripper similar to that of Figs 3, 4 and 5, modified according to a second embodiment of the invention.

Said gripper basically comprises a supporting fork 201, a gripping body 202, a grasping unit 203 having movable grasping devices comprising movable levers 204, and a fork 205 for overturning and rotating the bottles again in the initial verse (final rotation).

The supporting fork 201 is adapted to be connected to the periphery of the carousel of a rinsing or blowing machine for containers like bottles, tins etc...

The movable levers 204, working as grippers, are driven by a cursor unit 210, comprising a magnetic pivot 223 sliding along an axis X of the gripping body, in a seat defined by the coupling of the movable levers 204, in attractive relation with a further magnetic element 224 fastened on the gripping body 202.

As an effect of the position of the magnetic pivot 223, of the fulcrum point of the movable levers 204 and of the attraction exerted by the magnetic element 224, the gripper is normally closed. It is only because of the passage of the bottleneck inserted and extracted from the front part of the gripper that the movable levers 204 move, and consequently also the magnetic pivot 223, which still remains within the attraction field of the magnetic element 224 exerting on the rear part of the movable levers 204 a force sufficient to keep the bottle within the same levers, moves.

Figs 11, 12 and 13 show a gripper similar to that of Figs 3, 4 and 5, modified according to a third embodiment of the invention.

Said gripper basically comprises a supporting fork 301, a gripping body 302, a grasping unit 303 with movable grasping devices comprising the movable levers 304, a fork 305 for overturning and rotating the bottles again in the initial verse (final rotation).

The movable levers 304 are associated with devices arranged for exerting a closing force of the gripping, for example comprising two magnets 326 and 327 arranged on said movable levers as to face each other.

The same movable levers 304, which are thus normally closed, are associated with a cursor unit 310, comprising a magnetic pivot 323 movable along an axis X of the gripping body, in a seat defined by the coupling of the same movable levers 304.

At least another magnetic element 324 is associated with the fixed part of the machine, placed in proximity of the stars. Said element is suitable for exerting a repulsion force on said pivot 323 when this one is facing it.

As an effect of said repulsion force position and of the fulcrum point of the movable levers 304, the magnetic pivot 323 works on them prevailing over the closing force exerted by said magnets 326 and 327, causing the opening of the gripper and the release of the bottle.

Of course, what stated with reference to the first embodiment about the kind of the magnets, the sense of the forces that they exert between each other and the inversion of the kinematic motions driving the gripper is valid also for the second and third embodiments of the invention.

In particular, in the third embodiment the magnetic element 324 can be replaced with a magnetic guide (or cam) along all the circular course of the carousel. Said guide (or cam) would exert two opposite forces on the magnetic pivot 323, e.g. as to repel it when the pivot is in proximity of a star and make the gripper open, and as to attract it along the rest of the course of the gripper, so that this latter is kept closed. In this case the two magnets 326 and 327 can be removed.

## Claims

1. System for actuating a gripper for rinsing or blowing machines for containers, namely for bottles, comprising at least:
- a support (101, 201) to be fixed on a rinsing or blowing machine;
- a gripping body (102, 202) connected to said support (101, 201);
- movable gripping and release devices (104, 204, 304) for said containers;
- a unit (110, 210) movable with respect to the gripping body (102, 202) and arranged so as to activate said movable gripping devices (104, 204, 304),
- an opposition device associated with said movable unit (110, 210), adapted to exert a return action of the movable unit (110, 210) and of the gripping means (104, 204) to set them again in a predetermined idle position,
**characterized in that**
said opposition device comprises a first magnet (123, 223) adapted to interact magnetically with an opposition element (124, 224) to exert said return action, in which said first magnet (123, 223) is associated with the movable unit (110, 210) and is movable and said opposition element is a stationary second magnet (124, 224) which is integral with the gripping body (102, 202).

2. System for actuating a gripper for rinsing or blowing machines for containers, namely for bottles,
The said machine comprises a turntable or carusel provided at the periphery with a plurality of grippers and nozzles
the said grippers comprising at least:
- a support (301) to be fixed on a rinsing or blowing machine;
- a gripping body (302) connected to said support (301);
- movable gripping and release devices (304) for said containers;
- a unit (310) movable with respect to the gripping body (302) and arranged so as to activate said movable gripping devices (304),
- an opposition device associated with said movable unit (310), adapted to exert a return action of the movable unit (310) and of the gripping means (304) to set them again in a predetermined idle position,
**characterized in that**
said opposition device comprises a first magnet (323) adapted to interact magnetically with an opposition element to exert said return action, in which the said first magnet (323) is movable and the said opposition element is a second magnet (324) which is stationary and is secured to a fixed part of the machine relatively to the circular course of the carusel.

3. System for actuating a gripper according to claim 1 or 2, **characterized in that** at least one magnet (123, 223, 323) and said opposition element (124, 224, 324) are arranged to react to the movement of said movable unit (110, 210, 310) by reciprocal magnetic repulsion.

4. System for actuating a gripper according to claim 1 or 2, **characterized in that** at least one magnet (123, 223, 323) and said opposition element (124, 224, 324) are arranged to react to the movement of said movable unit (110, 210, 310) by reciprocal magnetic attraction.

5. System for actuating a gripper according to claims 1 or 2 **characterized in that** the movable magnet (123, 223, 323) and the fixed magnet (124, 224, 324) are arranged so as to have their like poles facing each other and to react by a repelling force contrasting the approach of said movable magnet (123, 223, 323) towards said fixed magnet (124, 224, 324).

6. System for actuating a gripper according to claims 1 or 2, **characterized in that** the movable magnet (123, 223, 323) and the fixed magnet (124, 224, 324) are arranged so as to have their unlike poles facing each other and to react by an attraction force in relation to the approach of said movable magnet (123, 223, 323) towards said fixed magnet (124, 224, 324).

7. System for actuating a gripper according to any of the previous claims 1, 3 to 6, **characterized in that** the movable unit (110) is a cursor unit (110) comprising a piston (118) sliding in an hollow seat (120) of the gripping body (102); said piston (118) is provided with a front seat (122), in which said movable magnet (123) is housed; the fixed magnet (124) is housed in said hollow seat (120) of the gripping body (102), facing the movable magnet (123).

8. System for actuating a gripper according to any of the previous claims 1, 3 to 7, **characterized in that** the fixed magnet (124) is inserted in a plastic bush (125) forced into the hollow seat (120) of the gripping body (102).

9. System for actuating a gripper according to any of the previous claims, **characterized in that** at least one among the mentioned movable magnets (123, 223, 323) and fixed magnets (124, 224, 324) is an electromagnet.

10. System for actuating a gripper according to any of claim 7 to 9, **characterized in that** the cursor unit (110, 210, 310) is sliding with respect to the gripping body (102, 202, 302) and works by a "thrust" movement with respect to said gripping body (102, 202, 302) to activate said gripping devices (104, 204, 304).

11. System for actuating a gripper according to any of claims 7 to 9, **characterized in that** the cursor unit (110, 210, 310) is sliding with respect to the gripping body (102, 202, 302) and works by a traction movement with respect to said gripping body (102, 202, 302) to activate said gripping devices (104, 204, 304).

12. System for actuating a gripper according to claims 1 or 2, **characterized in that** the movable unit is a cursor unit (210, 310) comprising a magnetic pivot (223, 323) sliding along an axis (X) of the gripping body.

13. System for actuating a gripper according to claim 12, **characterized in that** said magnetic pivot (223, 323) is housed in a seat defined by the coupling of the same movable gripping devices in the form of movable levers (204, 304).

14. System for actuating a gripper according to claim 13, **characterized in that** said movable levers (304) comprise at least two magnets (326, 327) arranged one facing each other on said movable levers.

15. System for actuating a gripper according to any of the previous claims 2, 3, 4, 5, 6, 9, 10, 11, ,12, 13, 14, **characterized in that** the fixed magnet (324) extends along a circular fixed course with respect to the gripper.

16. Rinsing or blowing machine for containers, namely for bottles, comprising a system for actuating a gripper according to one or more of the previous claims.

17. System for actuating a gripper according to claim 7, **characterized in that** said cursor unit (110) further comprises a roller (117) interacting with a suitable driving cam (130).

## Patentansprüche

1. Betätigungssystem eines Greifers für Spül-oder Blasmaschinen für Behälter, nämlich für Flaschen, bestehend aus mindestens:
- einem Gestell (101, 201) das an einer Spül- oder Blasmaschine befestigbar ist;
- einem Greifkörper (102, 202), der mit dem genannten Gestell (101, 201) verbunden ist;
- beweglichen Greif- und Abgabeeinrichtung (104, 204, 304) für die genannten Behälter;
- einer Einheit (110, 210), die beweglich bezogen auf den Greifkörper (102, 202) und derart angeordnet ist, dass durch diese die genannte Greifeinrichtungen (104, 204, 304) aktivierbar sind,
- einem Widerstandsgerät, das mit der genannten beweglichen Einheit (110, 210) verbunden ist, die derart ausgestaltet ist, dass eine Zurücksetzung der beweglichen Einheit (110, 210) und den Greifmitteln (104, 204) erfolgt, um diese erneut in eine vorgegebene Ruhestellung zu überführen,
**dadurch gekennzeichnet,**
**dass** das genannte Widerstandsgerät einen ersten Magneten (123, 223) aufweist, der derart ausgestaltet ist, dass dieser magnetisch mit dem Widerstandsgerät (124, 224) zusammenwirkt, um die genannte auszuüben, in welcher der genannte erste Magnet (123, 223) mit der beweglichen Einheit (110, 210) verbunden und beweglich ist und das das genannte Widerstandsgerät ein ortsfester zweiter Magnet (124,224) ist, der mit dem Greifkörper (102, 202) verbunden ist.

2. Betätigungssystem eines Greifers für Spül- oder Blasmaschinen für Behälter, nämlich für Flaschen, wobei die genannte Maschine einen Drehtisch oder ein Karussell umfasst, das an dessen Außenseite mit einer Vielzahl von Greifern und Extrudern versehen ist,
die genannten Greifer bestehen mindestens aus:
- einem Gestell (301), das an einer Spül- oder Blasmaschine angebracht ist;
- einem Greifkörper (302), der mit dem genannten Gestell (300) verbunden ist;
- bewegliche Greif- und Abgabeeinrichtungen (304) für die genannten Behälter;
- eine Einheit (310), die bezogen auf den Greifkörper (302) beweglich und die derart angeordnet ist, dass diese die genannten beweglichen Greifeinrichtungen (304) aktiviert;
- ein Widerstandsgerät, das mit der genannten beweglichen Einheit (310) verbunden ist, derart, dass durch diese eine Zurücksetzung der beweglichen Einheit (310) und der Greifmittel (304) erfolgt, so dass diese erneut in eine vorgegebene Ruhestellung überführt sind,
**dadurch gekennzeichnet,**
**dass** das genannte Widerstandsgerät einen ersten Magneten (323) aufweist, der derart ausgestaltet ist, dass dieser magnetisch mit einem Widerstandsgerät zusammenwirkt, durch das die genannte Rückstellung erzielt ist, in der der genannte erste Magnet (323) beweglich ist, und das genannte Widerstandsgerät ein zweiter Magnet (324) ist, der ortsfest ist und der an einem feststehenden Maschinenteil befestigt ist, bezogen auf dem kreisförmigen Außenumfang des Karussells.

3. Betätigungssystem eines Greifers nach Anspruch 1 oder 2,
**dadurch gekennzeichnet,**
**dass** mindestens einer der Magnete (123, 223, 323) und das genannte Widerstandsgerät (124, 224, 324) derart angeordnet sind, dass diese auf die Bewegungen der genannten beweglichen Einheit (110, 210, 310) durch reziproke magnetische Abstoßung reagieren.

4. Betätigungssystem eines Greifers nach Anspruch 1 oder 2,
**dadurch gekennzeichnet,**
**dass** mindestens einer der Magnete (123, 223, 323) und das genannte Widerstandsgerät (124, 224, 324) derart angeordnet sind, dass diese auf die Bewegung der genannten beweglichen Einheit (110, 210, 310) durch reziproke magnetische Anziehungskraft reagieren.

5. Betätigungssystem eines Greifers nach Anspruch 1 oder 2,
**dadurch gekennzeichnet,**
**dass** der bewegliche Magnet (123, 223, 323) und der ortsfeste Magnet (124, 224, 324) derart angeordnet sind, dass durch deren gleichen Pole gegenüberliegend zueinander ausgerichtet sind und die durch eine reziproke Kraft, die der Annäherung des genannten beweglichen Magneten (123, 223, 323) entgegenwirkt, hinwärts zu dem genannten ortsfesten Magneten (124, 224, 324) verläuft.

6. Betätigungssystem eines Greifers nach Anspruch 1 oder 2,
**dadurch gekennzeichnet,**
**dass** der bewegliche Magnet (123, 223, 323) und der ortsfeste Magnet (124, 224, 324) derart ausgerichtet sind, dass deren Gegenpole gegenüberliegend zueinander angeordnet sind und die derart zusammenwirken, dass durch eine Anziehungskraft in Bezug auf die Annäherung des genannten beweglichen Magneten (123, 223, 323) hinwärts zu den genannten ortsfesten Magneten (124, 224, 324) entsteht.

7. Betätigungssystem eines Greifers nach einem der vorgenannten Ansprüche 1, 3 bis 6,
**dadurch gekennzeichnet,**
**dass** die bewegliche Einheit (110) eine Zeigereinheit (110) ist, umfassend einen Kolben (118), der in einer Aussparung (120) des Greifkörpers (102) beweglich ist; wobei der genannte Kolben (118) mit einem Frontsitz (122) ausgestattet ist, in dem der genannte bewegliche Magnet (123) befestigt ist; wobei der erste Magnet (124) in der genannten Aussparung (120) des Greifkörpers (102) untergebracht ist, derart, dass dieser dem beweglichen Magneten (123) gegenüberliegt.

8. Betätigungssystem eines Greifers nach einem oder mehreren der vorgenannten Ansprüche 1, 3 bis 7,
**dadurch gekennzeichnet,**
**dass** der ortsfeste Magnet (124) in einer Kunststoffbuchse (125) eingesetzt ist, die in die Aussparung (120) des Greifkörpers (102) eingepresst ist.

9. Betätigungssystem eines Greifers nach einem der vorgenannten Ansprüche,
**dadurch gekennzeichnet,**
**dass** zumindest einer unter den genannten beweglichen Magneten (123, 223, 323) und der ortsfesten Magneten (124, 224, 324) ein Elektromagnet ist.

10. Betätigungssystem eines Greifers nach einem der Ansprüche 7 bis 9,
**dadurch gekennzeichnet,**
**dass** die Zeigereinheit (110, 210, 310) bezogen auf den Greifkörper (102, 202, 302) beweglich ist, wobei diese durch eine "thrust" Bewegung, bezogen auf den genannten Greifkörper (102, 202, 302), arbeitet, derart, dass durch diese die genannte Greifeinrichtung (104, 204, 304) aktiviert ist.

11. Betätigungssystem eines Greifers nach einem der Ansprüche 7 bis 9,
**dadurch gekennzeichnet,**
**dass** die Zeigereinheit (110, 210, 310) bezogen auf den Greifkörper (102, 202, 302) beweglich ist und durch eine Durchzugskraft betätigt ist, bezogen auf den genannten Greifkörper (102, 202, 302), derart, dass durch diese die genannte Greifeinrichtung (104, 204, 304) aktivierbar ist.

12. Betätigungssystem eines Greifers nach Anspruch 1 oder 2,
**dadurch gekennzeichnet,**
**dass** die bewegliche Zeigereinheit (210, 310) einen magnetischen Drehpunkt (223, 323) umfasst, der beweglich entlang einer Achse (X) des Greifkörpers ist.

13. Betätigungssystem eines Greifers nach Anspruch 12,
**dadurch gekennzeichnet,**
**dass** der genannte magnetische Drehpunkt (223, 323) in einem Sitz untergebracht ist, der durch die Verbindung der Greifeinrichtungen in der Form der genannten beweglichen Hebelarme (204, 304) gebildet ist.

14. Betätigungssystem eines Greifers nach Anspruch 13,
**dadurch gekennzeichnet,**
**dass** die genannten beweglichen Hebelarme (304) mindestens zwei Magnete (326, 327) aufweisen, die derart angeordnet sind, dass sich diese gegenseitig gegenüberliegend auf den genannten beweglichen Hebelarmen befinden.

15. Betätigungssystem eines Greifers nach einem der vorgenannten Ansprüche 2, 3, 4, 5, 6, 9, 10, 11, 12, 13, 14,
**dadurch gekennzeichnet,**
**dass** der feststehende Magnet (324) sich über eine kreisförmige ortsfeste Kurve, bezogen auf den Greifer erstreckt.

16. Spül- oder Blasmaschine für Behälter, nämlich für Flaschen, bestehend aus einem Betätigungssystem eines Greifers nach einem oder mehreren der vorgenannten Ansprüche.

17. Betätigungssystem eines Greifers nach Anspruch 7,
**dadurch gekennzeichnet,**
**dass** die genannte Zeigereinheit (310) einen Roller (117) aufweist, der mit einem geeigneten Antriebskamm (130) zusammenwirkt.

## Revendications

1. Système pour actionner une pince de préhension pour machines de rinçage ou de soufflage pour récipients, à savoir pour des bouteilles, comprenant au moins :
un support (101, 201) destiné à être fixé sur une machine de rinçage ou de soufflage ;
un corps de préhension (102, 202) raccordé audit support (101, 201) ;
des dispositifs de préhension et de libération mobiles (104, 204, 304) pour lesdits récipients ;
une unité (110, 210) mobile par rapport au corps de préhension (102, 202) et agencée afin d'activer lesdits dispositifs de préhension mobiles (104, 204, 304),
un dispositif d'opposition associé à ladite unité mobile (110, 210), adapté pour exercer une action de rappel de l'unité mobile (110, 210) et des moyens de préhension (104, 204) pour les placer à nouveau dans une position arrêtée prédéterminée,
**caractérisé en ce que** :
ledit dispositif d'opposition comprend un premier aimant (123, 223) adapté pour interagir magnétiquement avec un élément d'opposition (124, 224) afin d'exercer ladite action de rappel, dans laquelle ledit premier aimant (123, 223) est associé avec l'unité mobile (110, 210) et est mobile et ledit élément d'opposition est un second aimant fixe (124, 224) qui est solidaire avec le corps de préhension (102, 202).

2. Système pour actionner une pince de préhension pour machines de rinçage ou de soufflage pour récipients, à savoir des bouteilles,
ladite machine comprend un plateau tournant ou carrousel prévu à la périphérie avec une pluralité de pinces de préhension et de buses,
lesdites pinces de préhension comprenant au moins :
un support (301) destiné à être fixé sur une machine de rinçage ou de soufflage ;
un corps de préhension (302) raccordé audit support (301);
des dispositifs de préhension et de libération mobiles (304) pour lesdits récipients ;
une unité (310) mobile par rapport au corps de préhension (302) et agencée afin d'activer lesdits dispositifs de préhension mobiles (304),
un dispositif d'opposition associé avec ladite unité mobile (310), adapté pour exercer une action de rappel de l'unité mobile (310) et des moyens de préhension (304) pour les placer à nouveau dans une position arrêtée prédéterminée,
**caractérisé en ce que** :
ledit dispositif d'opposition comprend un premier aimant (323) adapté pour interagir magnétiquement avec un élément d'opposition afin d'exercer ladite action de rappel, dans laquelle ledit premier aimant (323) est mobile et ledit élément d'opposition est un second aimant (324) qui est fixe et est fixé sur une partie fixe de la machine par rapport à la course circulaire du carrousel.

3. Système pour actionner une pince de préhension selon la revendication 1 ou 2, **caractérisé en ce qu'**au moins un aimant (123, 223, 323) et ledit élément d'opposition (124, 224, 324) sont agencés pour réagir au mouvement de ladite unité mobile (110, 210, 310) par répulsion magnétique réciproque.

4. Système pour actionner une pince de préhension selon la revendication 1 ou 2, **caractérisé en ce qu'**au moins un aimant (123, 223, 323) et ledit élément d'opposition (124, 224, 324) sont agencés pour réagir au mouvement de ladite unité mobile (110, 210, 310) par attraction magnétique réciproque.

5. Système pour actionner une pince de préhension selon les revendications 1 ou 2, **caractérisé en ce que** l'aimant mobile (123, 223, 323) et l'aimant fixe (124, 224, 324) sont agencés afin d'avoir leurs pôles similaires qui se font face et pour réagir par une force de répulsion contrastant l'approche dudit aimant mobile (123, 223, 323) vers ledit aimant fixe (124, 224, 324).

6. Système pour actionner une pince de préhension selon les revendications 1 ou 2, **caractérisé en ce que** l'aimant mobile (123, 223, 323) et l'aimant fixe (124, 224, 324) sont agencés afin d'avoir leurs pôles contraires qui se font face et pour réagir par une force d'attraction par rapport à l'approche dudit aimant mobile (123, 223, 323) vers ledit aimant fixe (124, 224, 324).

7. Système pour actionner une pince de préhension selon l'une quelconque des revendications 1, 3 à 6, **caractérisé en ce que** l'unité mobile (110) est une unité de curseur (110) comprenant un piston (118) coulissant dans un siège creux (120) du corps de préhension (102) ; ledit piston (118) est prévu avec un siège avant (122) dans lequel ledit aimant mobile (123) est logé ; l'aimant fixe (124) est logé dans ledit siège creux (120) du corps de préhension (102) faisant face à l'aimant mobile (123).

8. Système pour actionner une pince de préhension selon l'une quelconque des revendications 1, 3 à 7, **caractérisé en ce que** l'aimant fixe (124) est inséré dans une douille en plastique (125) forcée dans le siège creux (120) du corps de préhension (102).

9. Système pour actionner une pince de préhension selon l'une quelconque des revendications précédentes, **caractérisé en ce qu'**au moins l'un parmi les aimants mobiles (123, 223, 323) et les aimants fixes (124, 224, 324) mentionnés, est un électroaimant.

10. Système pour actionner une pince de préhension selon l'une quelconque des revendications 7 à 9, **caractérisé en ce que** l'unité de curseur (110, 210, 310) coulisse par rapport au corps de préhension (102, 202, 302) et fonctionne par un mouvement de "poussée" par rapport audit corps de préhension (102, 202, 302) pour activer lesdits dispositifs de préhension (104, 204, 304).

11. Système pour actionner une pince de préhension selon l'une quelconque des revendications 7 à 9, **caractérisé en ce que** l'unité de curseur (110, 210, 310) coulisse par rapport au corps de préhension (102, 202, 302) et fonctionne par un mouvement de traction par rapport audit corps de préhension (102, 202, 302) pour activer
lesdits dispositifs de préhension (104, 204, 304).

12. Système pour actionner une pince de préhension selon les revendications 1 ou 2, **caractérisé en ce que** l'unité mobile est une unité de curseur (210, 310) comprenant un pivot magnétique (223, 323) coulissant le long d'un axe (X) du corps de préhension.

13. Système pour actionner une pince de préhension selon la revendication 12, **caractérisé en ce que** ledit pivot magnétique (223, 323) est logé dans un siège défini par le couplage des mêmes dispositifs de préhension mobiles sous la forme de leviers mobiles (204, 304).

14. Système pour actionner une pince de préhension selon la revendication 13, **caractérisé en ce que** lesdits leviers mobiles (304) comprennent au moins deux aimants (326, 327) agencés l'un en face de l'autre sur lesdits leviers mobiles.

15. Système pour actionner une pince de préhension selon l'une quelconque des revendications 2, 3, 4, 5, 6, 9, 10, 11, 12, 13, 14, **caractérisé en ce que** l'aimant fixe (324) s'étend le long d'une course fixe circulaire par rapport à la pince de préhension.

16. Machine de rinçage ou de soufflage pour récipients, à savoir pour des bouteilles, comprenant un système pour actionner une pince de préhension selon une ou plusieurs des revendications précédentes.

17. Système pour actionner une pince de préhension selon la revendication 7, **caractérisé en ce que** ladite unité de curseur (110) comprend en outre un rouleau (117) interagissant avec une came d'entraînement (130) appropriée.
